# EUROPEAN PATENT APPLICATION

(11) **EP 2 642 829 A1**
(43) Date of publication of application: **25.09.2013**
(21) Application number: 13157844.5
(22) Date of filing: 05.03.2013
(51) Int. Cl.: H05B 37/02, H05B 33/08

(54) **Adaptive filter for LED dimmer**

(30) Priority: 22.03.2012 US 201261614353 P; 08.02.2013 US 201313763256
(71) Applicant: Iwatt, Inc., Campbell, CA 95008 (US)
(72) Inventor: Wang, Xiaoyan, Campbell, CA 95008 (US); Kesterson, John Willliam, Campbell, CA 95008 (US); Poon, Clarita, Campbell, CA 95008 (US); Yan, Liang, Campbell, CA 95008 (US)
(74) Representative: McLeish, Nicholas Alistair Maxwell

(57) **Abstract**

A dimming controller for an LED lamp controls dimming using an adaptive filter to reduce or eliminate perceivable flickering and to provide smooth transitions during active dimming. During stable conditions, the adaptive filter operates with a relatively narrow bandwidth to filter noise that may lead to perceivable flickering. During active or startup conditions, the adaptive mapping filter operates with a high bandwidth to provide a quick response to the dimmer switch.

## Description

### BACKGROUND OF THE INVENTION

### 1. Field of the Invention

The present invention relates to driving an LED (Light-Emitting Diode) lamp and, more specifically, to controlling dimming of the LED lamp.

### 2. Description of the Related Arts

LEDs are being adopted in a wide variety of electronics applications, for example, architectural lighting, automotive head and tail lights, backlights for liquid crystal display devices, flashlights, etc. Compared to conventional lighting sources such as incandescent lamps and fluorescent lamps, LEDs have significant advantages, including high efficiency, good directionality, color stability, high reliability, long life time, small size, and environmental safety.

The use of LEDs in lighting applications is expected to expand, as they provide significant advantages over incandescent lamps (light bulbs) in power efficiency (lumens per watt) and spectral quality. Furthermore, LED lamps represent lower environmental impact compared to fluorescent lighting systems (fluorescent ballast combined with fluorescent lamp) that may cause mercury contamination as a result of fluorescent lamp disposal.

However, conventional LED lamps cannot be direct replacements of incandescent lamps and dimmable fluorescent systems without modifications to current wiring and component infrastructure that have been built around incandescent light bulbs. This is because conventional incandescent lamps are voltage driven devices, while LEDs are current driven devices, requiring different techniques for controlling the intensity of their respective light outputs.

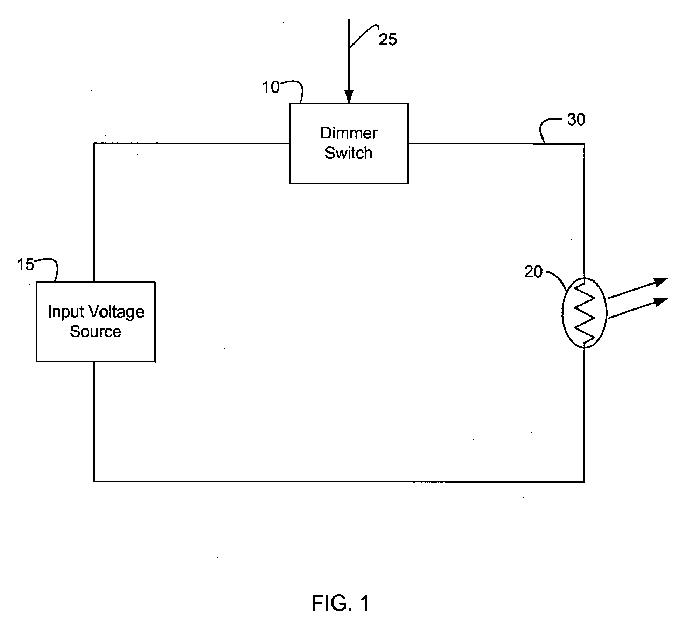

FIG. 1 illustrates a typical dimmer wiring configuration in conventional residential and commercial lighting applications. Predominantly, incandescent lamps operate off of alternating current (AC) systems. Specifically, a dimmer switch 10 is placed in series with an input voltage source 15 and the incandescent lamp 20. The dimmer switch 10 receives a dimming input signal 25, which sets the desired light output intensity of incandescent lamp 20. Control of light intensity of the incandescent lamp 20 is achieved by adjusting the RMS voltage value of the lamp input voltage (V-RMS) 30 that is applied to incandescent lamp 20. Dimming input signal 25 can either be provided manually (via a knob or slider switch) or via an automated lighting control system.

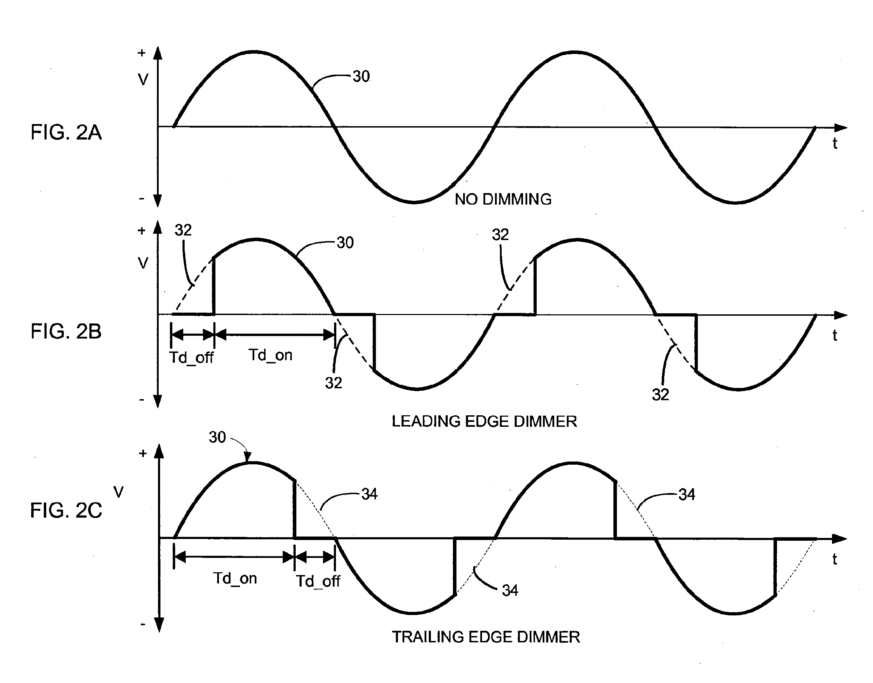

Many dimmer switches adjust the V-RMS by controlling the phase angle of the AC-input power that is applied to the incandescent lamp to dim the incandescent lamp. FIGS. 2A, 2B, and 2C illustrate typical lamp input voltage waveforms which are output to incandescent lamp 20. FIG. 2A illustrates a typical lamp input voltage waveform 30 when no dimming switch 10 is present, or when the dimmer switch 10 is set to maximum light intensity and the voltage signal from the input voltage source 15 is unaffected by the dimmer switch 10. FIG. 2B illustrates lamp input voltage 30 with a dimming effect based on leading edge phase angle modulation (i.e. a leading edge dimmer). In a leading edge dimmer, the dimmer switch 10 eliminates a section 32 having a period Td_off of the lamp input voltage 30 after the zero-crossings of the AC half-cycles and before the peaks. The input voltage 30 is unchanged during the period Td_on. As the dimming input signal 25 increases the desired dimming effect, the period Td_off of the eliminated section 32 increases, the period Td_on decreases, and the output light intensity decreases. For minimum dimming (maximum light intensity), the period Td_off of the eliminated section 32 becomes very small or zero.

FIG. 2C illustrates lamp input voltage 30 with a dimming effect based on trailing edge phase angle modulation (i.e. a trailing edge dimmer). Trailing edge dimmer switches operate by removing trailing portions 34 of AC voltage half-cycles, after peaks and before zero-crossings. The input voltage 30 is unchanged during the period Td_on. Again, as the dimming input signal 25 increases the desired dimming effect, the period Td_off of the removed sections 34 increases, the period Td_on decreases, and the light intensity decreases. For minimum dimming (maximum light intensity) the period Td_off of the eliminated section 34 becomes very small or zero.

Controlling the phase angle is a very effective and simple way to adjust the RMS-voltage supplied to the incandescent bulb and provide dimming capabilities. However, conventional dimmer switches that control the phase angle of the input voltage are not directly compatible with conventional LED lamps, since LEDs, and thus LED lamps, are current driven devices.

### SUMMARY OF THE INVENTION

An LED controller controls dimming of an LED lamp using adaptive filtering. The filter bandwidth adapts based on the operating condition, thus enabling the LED lamp to manage the tradeoff between noise rejection and response time based on the operating condition.

In one embodiment, the LED controller receives from a dimming switch, an input signal indicating a desired dimming amount for the LED lamp. The LED controller detects an operating condition of the LED lamp based on monitored characteristics of the LED lamp. The LED controller then dynamically adjusts bandwidth of an adaptive filter based on the detected operating condition. The adaptive filter is used to filter a dimming ratio signal indicating a proportion of power to provide to one or more LEDs to achieve the desired dimming amount.

In one embodiment, a power supply control state machine detects a state of the LED lamp as being in either a startup condition or a normal operating condition. Responsive to detecting the startup condition, the LED lamp is configured to have a first predetermined bandwidth. Responsive to detecting the normal operating condition, the adaptive filter is configured to have a second predetermined bandwidth narrower than the first predetermined bandwidth.

In one embodiment, the LED controller determines a rate of change in the desired dimming amount. Responsive to the rate of change being below a first threshold rate of change, the LED controller configures the adaptive filter to have a second predetermined bandwidth associated with a stable operating condition. Responsive to the rate of change exceeding the first threshold rate of change, the LED controller determines if the rate of change exceeds a second threshold. If the rate of change is below the second threshold, the LED controller configures the adaptive filter to have a third predetermined bandwidth corresponding to a normal active condition. The third predetermined bandwidth has a wider bandwidth than the second predetermined bandwidth. Otherwise, if the LED controller determines that the rate of change exceeds the second threshold, the LED controller configures the adaptive filter to have a fourth predetermined bandwidth corresponding to a rapid active condition. The fourth predetermined bandwidth is wider than the second and third predetermined bandwidths.

In summary, according to a first aspect of the present invention, there is provided a method for controlling dimming of an LED lamp, the method comprising: (a) receiving from a dimming switch, an input signal indicating a desired dimming amount for the LED lamp; (b) detecting an operating condition of the LED lamp based on monitored characteristics of the LED lamp; and (c) dynamically adjusting a bandwidth of an adaptive filter based on the detected operating condition, the adaptive filter to filter a dimming ratio signal indicating a proportion of power to provide to one or more LEDs to achieve the desired dimming amount.

In one embodiment, the method further comprises applying the adaptive filter to the dimming ratio signal to produce a post-filtered dimming ratio signal for controlling dimming of the one or more LEDs.

In one embodiment, the method further comprises mapping the desired dimming amount to the dimming ratio signal according to a non-linear mapping.

In one embodiment, dynamically adjusting the bandwidth of the adaptive filter comprises: (i) detecting a state of the LED lamp as being in either a startup condition or a normal operating condition; (ii) responsive to detecting the startup condition, configuring the adaptive filter to have a first predetermined bandwidth; and (iii) responsive to detecting the normal operating condition, configuring the adaptive filter to have a second predetermined bandwidth narrower than the first predetermined bandwidth.

In one embodiment, dynamically adjusting the bandwidth of the adaptive filter comprises: (i) determining a rate of change in the desired dimming amount; (ii) responsive to the rate of change being below a first threshold rate of change, configuring the adaptive filter to have a second predetermined bandwidth corresponding to a stable condition of the LED lamp; and (iii) responsive to the rate of change exceeding the first threshold rate of change, configuring the adaptive filter to have a third predetermined bandwidth corresponding to an active condition of the LED lamp. Advantageously, determining the rate of change in the desired dimming amount comprises comparing the dimming ratio signal to the post-filtered dimming ratio. Advantageously, the second predetermined bandwidth corresponding to the active condition is wider than the first predetermined bandwidth corresponding to the stable condition.

In one embodiment, the adaptive filter comprises a digital filter, and wherein dynamically adjusting the bandwidth of the adaptive filter comprises adjusting a filter sampling rate of the adaptive filter.

In one embodiment, dynamically adjusting the bandwidth of the adaptive filter comprises: (i) determining a rate of change in the desired dimming amount; (ii) responsive to the rate of change being below a first threshold rate of change, configuring the adaptive filter to have a second predetermined bandwidth corresponding to a stable condition of the LED lamp; (iii) responsive to the rate of change exceeding the first threshold rate of change and being below a second threshold rate of change, configuring the adaptive filter to have a third predetermined bandwidth corresponding to a normal active condition of the LED lamp; and (iv) responsive to the rate of change exceeding the second threshold rate of change, configuring the adaptive filter to have a fourth predetermined bandwidth corresponding to a rapid active condition of the LED lamp. Advantageously, the fourth predetermined bandwidth corresponding to the rapid active condition is wider than the second predetermined bandwidth corresponding to the stable condition and wider than the third predetermined bandwidth associated with the normal active condition. Advantageously, the fourth predetermined bandwidth comprises a maximum allowable bandwidth of the adaptive filter. More advantageously, the method of claim 11, wherein the adaptive filter comprises a digital filter, and wherein configuring the adaptive filter to have the fourth predetermined bandwidth comprises configuring registers of the adaptive filter to follow an input value to the adaptive filter.

According to a second aspect of the present invention, there is provided an LED controller for controlling dimming of an LED lamp, the LED controller comprising: (a) a phase detector to determine a phase of an input signal received from a dimming switch and to generate a phase output signal indicating a desired dimming amount for the LED lamp; (b) a dimming curve mapping unit to map the phase output signal corresponding to the desired dimming amount to a dimming ratio signal indicating a proportion of power to provide to one or more LEDs to achieve the desired dimming amount; (c) an adaptive filter to filter the dimming ratio signal to produce a post-filtered dimming ratio signal for controlling brightness of the one or more LEDs; (d) a bandwidth control unit to detect an operating condition of the LED lamp based on monitored characteristics of the LED lamp and generate a filter control signal to dynamically adjusts a bandwidth of the adaptive filter based on the detected operating condition; and (e) a boost circuit and current regulator controller to generate control signals for regulating current in the LED lamp based on the post-filtered dimming ratio signal to achieve the desired dimming amount.

In one embodiment, the LED controller further comprises a power supply control state machine to detect a state of the LED lamp as being in either a startup condition or a normal operating condition, the power supply control state machine generating a state signal indicating the detected state; wherein the bandwidth control unit is further configured to receive the startup condition signal and configure the adaptive filter to have a first predetermined bandwidth in response to the state signal indicating the startup operating condition and to configuring the adaptive filter to have a second predetermined bandwidth responsive to the state signal indicating the normal operating condition, the second predetermined bandwidth narrower than the first predetermined bandwidth.

In one embodiment, the bandwidth control unit is further configured to configure the adaptive filter to have a second predetermined bandwidth corresponding to a stable condition of the LED lamp responsive to detecting that a rate of change of the desired dimming amount is below a first threshold rate of change, and to configure the adaptive filter to have a third predetermined bandwidth corresponding to a active condition of the LED lamp responsive to detecting that the rate of change of the desired dimming amount exceeds the first threshold rate of change. Advantageously, the third predetermined bandwidth corresponding to the active condition is wider than the second predetermined bandwidth corresponding to the stable condition.

In one embodiment, the bandwidth control unit is further configured to compare the dimming ratio signal to the post-filtered dimming ratio to generate a comparison result, and to determine the operating condition of the LED based at least in part on the comparison result.

In one embodiment, the adaptive filter comprises a digital filter, and wherein the bandwidth control unit is further configured to dynamically adjusting the bandwidth of the adaptive filter by adjusting a filter sampling rate of the adaptive filter.

In one embodiment, the bandwidth control unit is further configured to configure the adaptive filter to have a second predetermined bandwidth corresponding to a stable condition of the LED lamp responsive to detecting that a rate of change of the desired dimming amount is below a first threshold rate of change, to configure the adaptive filter to have a third predetermined bandwidth corresponding to a normal active condition of the LED lamp responsive to detecting that the rate of change of the desired dimming amount exceeds a first threshold rate of change and is below a second threshold rate of change, and to configure the adaptive filter to have a fourth predetermined bandwidth corresponding to a rapid active condition of the LED lamp responsive to detecting that the rate of change of the desired dimming amount exceeds the second threshold rate of change.

Advantageously, the fourth predetermined bandwidth associated with the rapid active condition is wider than the second predetermined bandwidth corresponding to the stable condition and wider than the third predetermined bandwidth corresponding to the normal active condition.

Alternatively, the fourth predetermined bandwidth comprises a maximum allowable bandwidth of the adaptive filter. Optionally, the adaptive filter comprises a digital filter, and wherein the bandwidth control unit is further configured to configure the adaptive filter to have the fourth predetermined bandwidth by setting registers of the adaptive filter to follow an input value to the adaptive filter.

There is also described a method for configuring an adaptive filter in an LED lamp system, the adaptive filter filtering a signal indicative of a desired dimming amount of the LED lamp. The method comprises: (a) detecting a state of the LED lamp as being in either a startup condition or a normal operating condition; (b) responsive to detecting the startup condition, configuring the adaptive filter to have a first predetermined bandwidth; (c) responsive to detecting the normal operating condition, determining a rate of change in the desired dimming amount; (d) responsive to the rate of change being below a first threshold rate of change, configuring the adaptive filter to have a second predetermined bandwidth corresponding to a stable condition of the LED lamp; (e) responsive to the rate of change exceeding the first threshold rate of change, comparing the rate of change to a second threshold rate of change; (f) responsive to the rate of change being below the second threshold rate of change, configuring the adaptive filter to have a third predetermined bandwidth corresponding to a normal active condition of the LED lamp; and (g) responsive to the rate of change exceeding the second threshold rate of change, configuring the adaptive filter to have a fourth predetermined bandwidth corresponding to a rapid active condition of the LED lamp.

The features and advantages described in the specification are not all inclusive and, in particular, many additional features and advantages will be apparent to one of ordinary skill in the art in view of the drawings and specification. Moreover, it should be noted that the language used in the specification has been principally selected for readability and instructional purposes, and may not have been selected to delineate or circumscribe the inventive subject matter.

### BRIEF DESCRIPTION OF THE DRAWINGS

The teachings of the present invention can be readily understood by considering the following detailed description in conjunction with the accompanying drawings.
FIG. 1 is a block diagram illustrating a dimming system for incandescent lamps.
FIG.2A illustrates an example waveform produced by a dimming switch configured for no dimming.
FIG.2B illustrates an example waveform produced by a dimming switch configured for leading edge dimming.
FIG.2C illustrates an example waveform produced by a dimming switch configured for trailing edge dimming.
FIG. 3 illustrates a LED lamp circuit according to one embodiment of the present invention.
FIG. 4 is a block diagram illustrating an LED controller for controlling an LED lamp according to one embodiment of the present invention.
FIG. 5 illustrates a mapping curve between a phase modulation signal from a dimming switch and a dimming ratio signal for controlling LED dimming according to one embodiment of the present invention.
FIG. 6 is a flowchart illustrating a process for controlling an LED lamp according to one embodiment of the present invention.

### DETAILED DESCRIPTION OF EMBODIMENTS

The Figures (FIG.) and the following description relate to preferred embodiments of the present invention by way of illustration only. It should be noted that from the following discussion, alternative embodiments of the structures and methods disclosed herein will be readily recognized as viable alternatives that may be employed without departing from the principles of the claimed invention.

Reference will now be made in detail to several embodiments of the present invention(s), examples of which are illustrated in the accompanying figures. It is noted that wherever practicable similar or like reference numbers may be used in the figures and may indicate similar or like functionality. The figures depict embodiments of the present invention for purposes of illustration only. One skilled in the art will readily recognize from the following description that alternative embodiments of the structures and methods illustrated herein may be employed without departing from the principles of the invention described herein.

A dimming controller for an LED lamp controls dimming using an adaptive filter to reduce or eliminate perceivable flickering and to provide smooth transitions when actively changing the dimming level. The dimming controller detects whether the LED lamp is operating under a startup condition, an active condition (i.e., the dimming switch is being adjusted), or a stable condition (i.e., the dimming switch is not being adjusted). During stable conditions, the adaptive filter operates with a relatively narrow bandwidth to filter noise that may lead to perceivable flickering. During active and startup conditions, the adaptive mapping filter operates with a relatively wide bandwidth to provide a quick response to the dimmer switch. Embodiments of the LED lamp are described in further detail below.

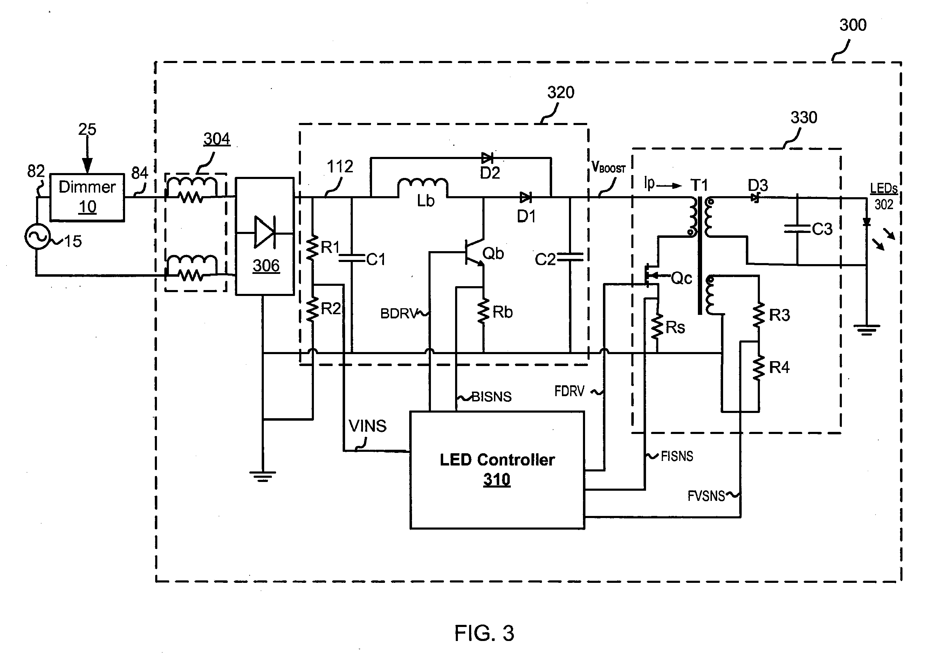

FIG. 3 illustrates an LED lamp system including LED lamp 300 used with a dimmer switch 10 (e.g., a conventional dimmer switch). LED lamp 300 according to various embodiments can be a direct replacement of an incandescent lamp 20 in a conventional dimmer switch setting, such as the setting of FIG. 1. A dimmer switch 10 is coupled in series with AC input voltage source 15 and LED lamp 300. Dimmer switch 10 controls dimming via phase modulation of an AC input voltage (e.g., via leading edge dimming or trailing edge dimming). Dimmer switch 10 receives a dimming input signal 25, which is used to set the desired light output intensity of LED lamp 300. Dimmer switch 10 receives AC input voltage signal 82 and adjusts the V-RMS value of lamp input voltage 84 in response to dimming input signal 25. In other words, control of the light intensity outputted by LED lamp 300 is achieved by dimmer switch 10 adjusting the V-RMS value of the lamp input voltage 84 that is applied to LED lamp 300. Dimming input signal 25 can either be provided manually (via a knob or slider switch, not shown herein) or via an automated lighting control system (not shown herein). LED lamp 300 controls the light output intensity to vary proportionally to the lamp input voltage 84, exhibiting behavior similar to incandescent lamps.

One example of a dimmer switch 10 is described in U.S. Patent No. 7,936,132. In one embodiment, dimmer switch 10 employs phase angle switching to adjust the lamp input voltage 82 by using a TRIAC circuit (not shown). A TRIAC is a bidirectional device that can conduct current in either direction when it is triggered, or turned on. Once triggered, the TRIAC continues to conduct until the current drops below a certain threshold, called a holding current. For the internal timing of a TRIAC dimmer to function properly, current must be drawn from dimmer switch 10 at certain times. In one embodiment, LED lamp 300 is configured to draw current from dimmer switch 10 in a manner that allows the internal circuitry of dimmer switch 10 to function properly.

LED lamp 300 controls dimming of LEDs to achieve desired dimming based on the dimming input signal 25. LED lamp 300 controls dimming in a manner that reduces or eliminates perceivable flickering of the LEDs throughout the dimming range, and will cause the LED brightness to respond quickly and smoothly when dimmer input signal 25 to dimmer switch 10 is adjusted.

An embodiment of LED lamp 300 includes input filters 304, bridge rectifier 306, boost circuit 320, LED controller 310, current regulator 330, and one or more LEDs 302.

Input filters 304 (e.g., RL filters) filter lamp input voltage 84. These filters 304 help to reduce noise by limiting electromagnetic interference (EMI) and in-rush current. Bridge rectifier 306 generates a rectified input voltage 112 from the filtered lamp input voltage 84. Boost circuit 320 is an AC-DC converter that receives rectified input voltage 112 and generates a DC boosted voltage V_{BOOST} based on boost control signal BDRV from LED controller 310. Boost circuit 320 also provides sensed input voltage VINS and sensed boost current signal BISNS to LED controller 310. These signals are used by LED controller 310 to efficiently control boost circuit 320 as will be described below.

In one embodiment, boost circuit 320 comprises resistors R1, R2, and Rb, inductor Lb, diodes D1 and D2, switch Qb, input capacitor C1, and output capacitor C2. Inductor Lb stores power from rectified input voltage 112 (stored across capacitor C1) when switch Qb turns on and releases power to current regulator 330 (stored across capacitor C2) when boost switch Qb turns off. Diode D1 is coupled in series between inductor Lb and current regulator 330, and provides the power from boost inductor Lb to power converter 330 when switch Qb turns off. Boost resistor Rb is coupled in series with boost switch Qb and dissipates power from inductor Lb when switch Qb turns on. Diode D2 is coupled between rectified input voltage 112 and current regulator 330, and charges capacitor C2 when V_{BOOST} is lower than the rectified input voltage 112 (generally during startup conditions). Resistors R1 and R2 form a voltage divider to provide sense voltage VINS representing rectified input voltage 112. Furthermore, a feedback voltage BISNS across resistor Rb represents sensed current through Qb. Switch Qb is controlled by switch control signal BDRV to control the base current of Qb in a manner that efficiently delivers supply voltage V_{BOOST} to power converter 330 based on the feedback signals BISNS, VINS. Boost transistor Qb is shown as a bipolar junction transistor (BJT), but in other embodiments drive transistor Qb can be a metal oxide semiconductor field effect transistor (MOSFET).

Current regulator 330 receives the boosted DC voltage V_{BOOST} from the boost circuit 320 and a control signal FDRV from LED controller 310. Based on these signals, current regulator 330 regulates current through LEDs 302. Current regulator 330 may employ pulse-width-modulation (PWM) and/or constant current control to achieve the target light output intensity for the LEDs 302. In one embodiment, current regulator 330 comprises a flyback converter to regulate current through the LEDs 302.

In one embodiment, current regulator 330 comprises a transformer T1, a switch Q1 (e.g., a MOSFET transistor), resistors Rs, R3, and R4, diode D3, and output capacitor C3.

Transformer T1 stores power from boosted voltage Vboost when switch Qc turns on and releases power to LEDs 302 (stored across capacitor C3) via diode D3 when switch Qc turns off. Resistors R3, R4 are arranged in a voltage divider configuration to produce feedback voltage FVSNS representing voltage across the auxiliary winding of transformer T1. Voltage FISNS represents the primary current through the primary winding of T1 in the form of a voltage across sense resistor Rs. Based on the feedback signals FVSNS, FISNS, LED controller 310 generates drive signal FDRV to control switching of current regulator 320 to efficiently control power to the LEDs 302.

In one embodiment, LED controller 310 controls current regulator 330 to achieve constant current operation in which substantially constant current is maintained through the LEDs 302. The output current through the LEDs 302 is proportional to the product of the peak voltage on the current sensing resistor Rs (represented by FISNS) and the reset time of transformer T1. The reset time of the transformer T1 is the time between when switch Q1 is turned off and the falling edge of the transformer auxiliary voltage (represented by FSNS). In one embodiment, LED controller 310 uses constant current control to implement peak current switching to limit primary current Ip through primary winding of T1 by sensing the voltage FISNS and to turn off the switch Q1 when FISNS exceeds a threshold value Vipeak. LED controller 310 also samples voltage FVSNS at the end of each switching cycle of current regulator 330 to measure the reset time of the transformer T1. Constant current regulation is maintained by adjusting the threshold value Vipeak in inverse proportion to the measured reset time of the transformer T1 in the previous cycle. An example embodiment of constant current control operation is described in more detail in U.S. Patent No. 7,443,700 entitled "On-time Control for Constant Current Mode in a Flyback Power Supply", issued on October 28, 2008.

### LED CONTROLLER

The LED controller 310 receives sensed input voltage VINS and the various feedback signals BISNS, FISNS, FVSNS, and generates output control signals BDRV and FDRV to control switching of boost circuit 320 and current regulator 330 respectively in order to achieve desired dimming of LEDs 302. Furthermore, LED controller 310 operates to control switching in order to reduce or eliminate perceivable flickering and to ensure the perceived LED brightness will respond quickly and smoothly to the dimming switch.

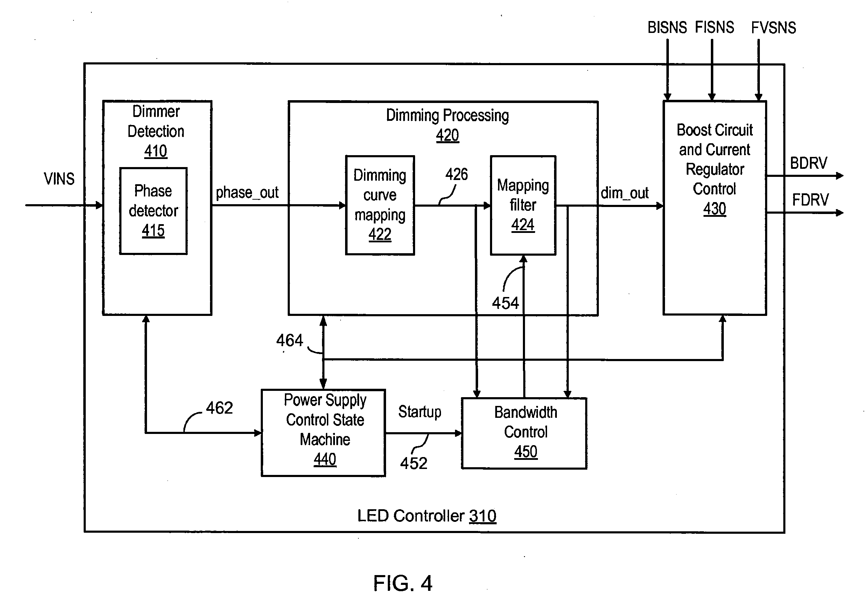

FIG. 4 illustrates an example embodiment of an LED controller 310. LED controller 310 comprises dimmer detection unit 410, dimming processing unit 420, boost circuit and current regulator control unit 430, power supply control state machine 440, and bandwidth control module 450.

Dimmer detection unit 410 detects an amount of dimming to apply to the LEDs 302 based on VINS representing the dimmer switch output. In one embodiment, dimmer detection unit 410 comprises a phase detector 415 that receives the sensed input voltage VINS representing the rectified dimmer voltage and generates a dimming phase signal phase_out representing an amount of phase modulation (if any) detected in the sensed input voltage VINS (e.g., between 0 and 100%).

Dimming processing unit 420 receives the dimming phase signal phase_out and generates a dimming ratio signal dim_out representing a dimming ratio for controlling brightness of the LEDs. For example, in one embodiment, the dimming ratio represents a fraction of power to deliver to LEDs 302 to achieve the desired dimming. Thus, when the dimming ratio = 1, LED controller 310 produces control signals to control boost circuit 320 and current regulator 330 such that 100% of the available power is outputted to LEDs 302. When the dimming ratio = 0.1, LED controller 310 produces control signals to output 10% of the available power to LEDs 302. In one embodiment, dimming processing unit 420 maps phase_out to dim_out such that LED lamp 300 will behave similarly to an incandescent lamp in its luminosity response to dimming control signal 25. Thus, for example, if the dimmer switch 10 is set to 50% dimming, LED controller 310 will control current through LEDs 302 such that the LEDs output 50% of their maximum output luminosity. Furthermore, dimming processing unit 420 adaptively filters the dimming ratio signal depending on the operating conditions in order to provide a smooth response without substantial perceivable flickering as will be described below. The dimming ratio signal dim_out is used by boost circuit and current regulator control unit 430 to generate appropriate drive signals BDRV, FDRV to achieve desired dimming based on feedback signals BISNS, FISNS, FVSNS.

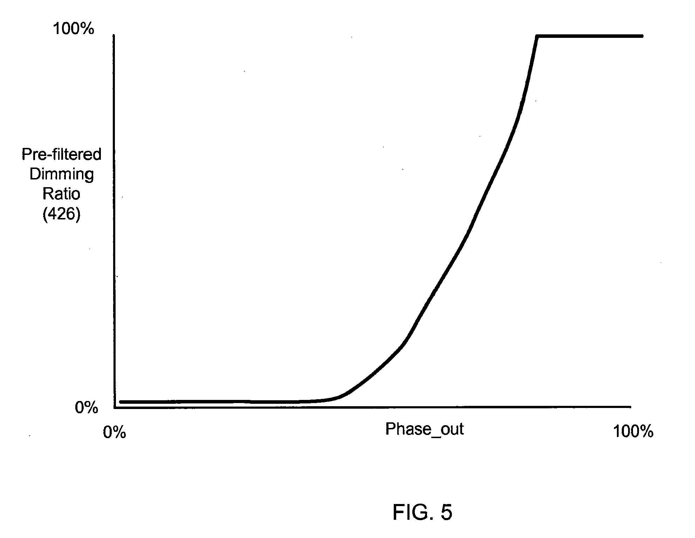

In one embodiment, the dimming processing unit 420 comprises a dimming curve mapping unit 422 and a mapping filter 424. Dimming curve mapping unit 422 maps the dimming phase signal phase_out to a pre-filtered dimming ratio signal 426 based on the luminosity curve of LED lamp 300. An embodiment of the mapping performed by dimming curve mapping unit 422 is illustrated in FIG. 5. As can be seen in FIG. 5, the mapping is non-linear and is steeper in the mid-range (i.e., a small change in phase modulation will cause a large change in the fraction of power delivered to LEDs 302 to achieve the desired dimming), and flatter at the extremes (i.e., a large change in phase modulation will cause only a small change or no change in the fraction of power delivered to LEDs 302 to achieve the desired dimming).

Referring again to FIG. 4, pre-filtered dimming ratio 426 is filtered by mapping filter 424 which has a bandwidth that is adaptively adjusted based on the current operating conditions of LED lamp 300. The bandwidth of the mapping filter 424 is related to the group delay, which defines the latency through filter 424 and therefore controls the response time of filter 424 to changing characteristics of pre-filtered dimming ratio 426. A narrower bandwidth of mapping filter 424 will have larger group delay through mapping filter 424. For example, in one embodiment of mapping filter 424, the group delay is reduced by half when the bandwidth is increase by a factor of two. Based on the operating condition, it may be desirable to vary the tradeoff between noise rejection (i.e., narrower filter bandwidth) and response time (i.e., wider filter bandwidth).

In one embodiment, bandwidth control unit 450 detects the operating condition of LED lamp 300 and configures the bandwidth of mapping filter 424 based on the detected condition. For example, in one embodiment, the bandwidth control unit 450 detects if the LED lamp 300 is operating in one of the following conditions: (1) stable operation (when dimmer switch 10 is not being adjusted), (2) active operation (when dimmer switch 10 is being adjusted), (3) startup operation (the condition when the power is turned on). Bandwidth control unit 450 detects the operating condition based on startup signal 452 received from power supply control state machine 440, pre-filtered dimming signal 426, and dimming output signal dim_out using techniques described in further detail below.

During startup conditions, LED controller 310 has no initial knowledge about the dimmer phase condition. Therefore, during startup conditions, a low DC group delay is desired. Thus, mapping filter 424 is configured with a relatively wide bandwidth (e.g., a first predetermined bandwidth) to enable controller 310 to quickly determine the dimmer phase angle and deliver the appropriate LED brightness.

During stable operation, response time is less important than noise rejection because the dimmer switch is not being adjusted. During stable operation, low-frequency noise may be present that could lead to perceivable flickering of the LED output if not properly filtered. A human eye is particularly sensitive to the effects of LED current ripple in the low frequency range (around 50Hz or lower). For example, such noise may be present based switching noise from: (1) the boost circuit 320 and current regulator 330 (operating, for example, in a 1 KHz to 240kHz frequency range); (2) from AC line surge and sag; and/or (3) from ON/OFF switching of dimmer switch. To effectively reduce or eliminate this noise, the filter is configured with a relatively narrow bandwidth (e.g., a second predetermined bandwidth) during stable dimming conditions.

During active dimmer operation, the filter operates to smooth the dimming ratio change so that as the dimmer is adjusted, there is a smooth response in LED brightness. As seen in FIG. 5 the mapping from the dimmer phase phase_out to the dimmer ratio dim_out is non-linear and has a lower slope at the low and high ends of the range than in the middle of the range. Thus, the mapping filter 424 will smooth the dimmer response to provide more consistent operation between the low/high and mid-range of the dimming curve. In one embodiment, the filter bandwidth is therefore configured to be relatively wide (e.g., a third predetermined bandwidth) during active operation to allow it to respond quickly to dimmer switch 10. The bandwidth during active operation may be similar to the first predetermined bandwidth using during startup conditions, or may be slightly narrower than the first predetermined bandwidth, but still wider than the second predetermined bandwidth used during stable dimming conditions.

In another embodiment, active operation is divided into one of two sub-operations: normal active operation or rapid active operation. Normal active operation occurs when the dimmer is adjusted at a normal rate (e.g., above a first threshold rate of change and below a second threshold rate of change in dimmer position) and the bandwidth of mapping filter 424 is configured to be relatively wide (e.g., the third predetermined bandwidth). Rapid active operation occurs when the dimmer is adjusted at a rapid rate (e.g., above the threshold rate of change in dimmer position such as when the dimmer switch is rapidly switched up and down). Here, the bandwidth of the filter is configured to have an even wider bandwidth than in the normal active operation (e.g., a fourth predetermined bandwidth). For example, in one embodiment, the bandwidth under rapid active operation is configured to be as wide as allowable to minimize group delay.

In one embodiment, mapping filter 424 is implemented as a first order Infinite Impulse Response (IIR) low pass filter with the bandwidth and group delay data related as follows for different detected operation conditions:

| **Detected Condition** | **Bandwidth (Hz)** | **DC group Delay (ms)** |
|---|---|---|
| Startup | 2.5 | 52.8 |
| Stable | 1 | 132 |
| Normal Active | 2 | 66 |
| Rapid Active | Max | Min |

In alternative embodiments, different bandwidths may be used in the different operating conditions.

The power supply control state machine 440 determines whether or not the LED controller is operating under a startup condition based on signals received from the dimmer detection unit 410 and/or the dimming processor 420. The power supply control state machine transmits a startup condition signal 452 to bandwidth control unit 450 indicating a state of the LED lamp as being either a startup state or a normal operation state. Power supply control state machine 440 also send startup condition signals to dimmer detection unit 410, dimmer processing unit 420 and boost and current regulator control unit 430 via connections 462, 464. This information may be used by the various units 410, 420, 430 to more accurately operate under startup conditions.

When bandwidth control unit 450 detects startup condition signal 452, the bandwidth control unit 450 sets the mapping filter 424 to have the appropriate bandwidth (e.g., the first predetermined bandwidth) for startup conditions via mapping filter control signal 454. Otherwise, if no startup condition is detected, bandwidth control unit 450 monitors the pre-filtered dimming ratio signal 426 and the post-filtered dimming ratio signal dim_out. When the difference between the pre-filtered dimming ratio signal 426 and dim_out is small (e.g., below a first predefined threshold), bandwidth control unit 450 determines that LED controller 300 is in a stable operating condition. Otherwise, when the difference is large because the dimming ratio changed significantly between current and previous samples, bandwidth control unit 450 determines that LED controller 300 is in an active operating condition. If the dimming ratio changes very rapidly (e.g., above a second threshold rate of change that is higher than the first threshold), the bandwidth control unit 450 determines that the LED controller 300 is operating under rapid active operation conditions. The bandwidth control unit 450 then adjusts bandwidth of the mapping filter 454 (e.g., to the fourth predetermined bandwidth) based on the detected condition via control signal 454.

A number of different methods can be used to adjust the bandwidth of the mapping filter 424. In one embodiment, the bandwidth of the mapping filter is adjusted by controlling the filter sampling rate via mapping filter control signal 454. The following table is an example of the sampling rate changes under the various operating conditions. In the table, below 1X means that the sampling rate is half of the AC line frequency. "Recharge" means that the filter is configured to have as wide of a bandwidth as possible (e.g., maximum bandwidth configuration). For example, in the maximum bandwidth configuration, the internal registers (e.g., memory cells) of the filter 424 may be set to follow the input value to the filter 424. This effectively bypasses the filter, thus having the effect of a very wide bandwidth.

| | Startup | Active Operation | | Stable Operation |
|---|---|---|---|---|
| | | Normal | Rapid | |
| Mapping Filter | 2.5X | 2X | recharge | 1X |

In alternative embodiments, the bandwidth can instead be adjusted by changing filter coefficients, switching filter types, or a combination of techniques.

The LED controller illustrated in FIG. 4 can be implemented, for example, using digital circuits, analog circuits, or a combination of digital and analog circuits. Furthermore, one or more components of the LED controller 310 can be implemented as a non-transitory computer-readable storage medium that stores instructions for execution by a processor (e.g., a microprocessor or microcontroller).

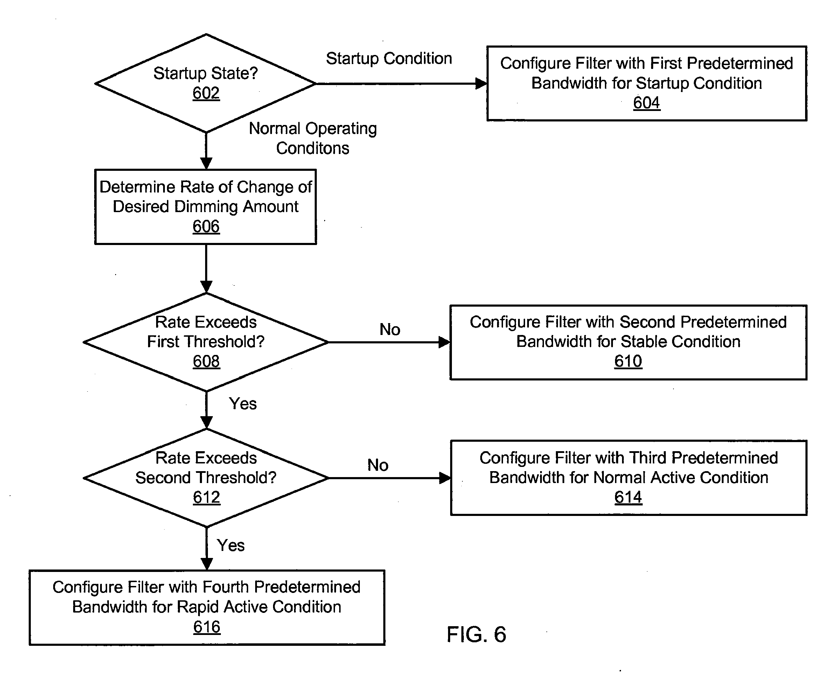

FIG. 6 illustrates an embodiment of a process for adjusting the bandwidth of the adaptive filter 424 based on operating condition of LED lamp 300. LED controller 310 determines 602 a startup state of LED lamp 300 as being in either a startup condition or a normal operating condition. Responsive to detecting the startup condition, adaptive filter 424 is configured 604 to have a first predetermined bandwidth suitable for startup conditions (e.g., relatively wide for fast response time). Otherwise, LED controller 310 determines 606 a rate of change in the desired dimming amount. LED controller then compares 608 the rate of change to a first threshold. Responsive to the rate of change not exceeding a first threshold rate of change, LED controller 310 determines that LED lamp 300 is operating in a stable condition and configures 610 adaptive filter 424 to have a second predetermined bandwidth suitable for stable conditions. The second predetermined bandwidth is generally narrower than the first predetermined bandwidth (e.g., by a factor of 2-2.5) in order to provide improved noise rejection. Responsive to the rate of change exceeding the first threshold rate of change, LED controller 310 compares 612 the rate of change to a second threshold, which is higher than the first threshold (i.e., faster rate of change). Responsive to the rate of change not exceeding the second threshold rate of change, LED controller 310 determines that the LED lamp is operating in a normal active condition and configures 614 adaptive filter 424 to have a third predetermined bandwidth suitable for normal active conditions. The third bandwidth is generally wider bandwidth than the second predetermined bandwidth (e.g., by a factor of 2-2.5) and may be similar to or slightly narrow than the first predetermined bandwidth. Responsive to the rate of change exceeding the second threshold rate of change, LED controller 310 determines that the LED lamp is operating in a rapid active condition and configures 616 adaptive filter 424 to have a fourth predetermined bandwidth suitable for rapid active conditions. The fourth predetermined bandwidth is generally wider than the first, second, and third predetermined bandwidths and in on one embodiment, is as wide as allowable by the adaptive filter 424.

Upon reading this disclosure, those of skill in the art will appreciate still additional alternative designs for controlling dimming of an LED lamp using an adaptive filter. Thus, while particular embodiments and applications of the present invention have been illustrated and described, it is to be understood that the invention is not limited to the precise construction and components disclosed herein and that various modifications, changes and variations which will be apparent to those skilled in the art may be made in the arrangement, operation and details of the method and apparatus of the present invention disclosed herein without departing from the scope of the invention.

## Claims

1. A method for controlling dimming of an LED lamp, the method comprising:
receiving from a dimming switch, an input signal indicating a desired dimming amount for the LED lamp;
detecting an operating condition of the LED lamp based on monitored characteristics of the LED lamp; and
dynamically adjusting a bandwidth of an adaptive filter based on the detected operating condition, the adaptive filter to filter a dimming ratio signal indicating a proportion of power to provide to one or more LEDs to achieve the desired dimming amount.

2. The method of claim 1, further comprising applying the adaptive filter to the dimming ratio signal to produce a post-filtered dimming ratio signal for controlling dimming of the one or more LEDs.

3. The method of claim 1, further comprising mapping the desired dimming amount to the dimming ratio signal according to a non-linear mapping.

4. The method of claim 1, wherein dynamically adjusting the bandwidth of the adaptive filter comprises:
detecting a state of the LED lamp as being in either a startup condition or a normal operating condition;
responsive to detecting the startup condition, configuring the adaptive filter to have a first predetermined bandwidth; and
responsive to detecting the normal operating condition, configuring the adaptive filter to have a second predetermined bandwidth narrower than the first predetermined bandwidth.

5. The method of claim 1, wherein dynamically adjusting the bandwidth of the adaptive filter comprises:
determining a rate of change in the desired dimming amount;
responsive to the rate of change being below a first threshold rate of change, configuring the adaptive filter to have a second predetermined bandwidth corresponding to a stable condition of the LED lamp; and
responsive to the rate of change exceeding the first threshold rate of change, configuring the adaptive filter to have a third predetermined bandwidth corresponding to an active condition of the LED lamp.

6. The method of claim 5, wherein determining the rate of change in the desired dimming amount comprises comparing the dimming ratio signal to the post-filtered dimming ratio.

7. The method of claim 5, wherein the third predetermined bandwidth corresponding to the active condition is wider than the second predetermined bandwidth corresponding to the stable condition.

8. The method of claim 1, wherein the adaptive filter comprises a digital filter, and wherein dynamically adjusting the bandwidth of the adaptive filter comprises adjusting a filter sampling rate of the adaptive filter.

9. The method of claim 1, wherein dynamically adjusting the bandwidth of the adaptive filter comprises:
determining a rate of change in the desired dimming amount;
responsive to the rate of change being below a first threshold rate of change, configuring the adaptive filter to have a second predetermined bandwidth corresponding to a stable condition of the LED lamp;
responsive to the rate of change exceeding the first threshold rate of change and being below a second threshold rate of change, configuring the adaptive filter to have a third predetermined bandwidth corresponding to a normal active condition of the LED lamp; and
responsive to the rate of change exceeding the second threshold rate of change, configuring the adaptive filter to have a fourth predetermined bandwidth corresponding to a rapid active condition of the LED lamp.

10. The method of claim 9, wherein the fourth predetermined bandwidth corresponding to the rapid active condition is wider than the second predetermined bandwidth corresponding to the stable condition and wider than the third predetermined bandwidth associated with the normal active condition.

11. The method of claim 9, wherein the fourth predetermined bandwidth comprises a maximum allowable bandwidth of the adaptive filter.

12. The method of claim 11, wherein the adaptive filter comprises a digital filter, and wherein configuring the adaptive filter to have the fourth predetermined bandwidth comprises configuring registers of the adaptive filter to follow an input value to the adaptive filter.

13. An LED controller for controlling dimming of an LED lamp, the LED controller comprising:
a phase detector to determine a phase of an input signal received from a dimming switch and to generate a phase output signal indicating a desired dimming amount for the LED lamp;
a dimming curve mapping unit to map the phase output signal corresponding to the desired dimming amount to a dimming ratio signal indicating a proportion of power to provide to one or more LEDs to achieve the desired dimming amount;
an adaptive filter to filter the dimming ratio signal to produce a post-filtered dimming ratio signal for controlling brightness of the one or more LEDs;
a bandwidth control unit to detect an operating condition of the LED lamp based on monitored characteristics of the LED lamp and generate a filter control signal to dynamically adjusts a bandwidth of the adaptive filter based on the detected operating condition; and
a boost circuit and current regulator controller to generate control signals for regulating current in the LED lamp based on the post-filtered dimming ratio signal to achieve the desired dimming amount.
